# EUROPEAN PATENT APPLICATION

(11) **EP 4 703 013 A1**
(43) Date of publication of application: **04.03.2026**
(21) Application number: 25198511.5
(22) Date of filing: 27.08.2025
(51) Int. Cl.: A62C 3/07, A62C 13/78

(54) **MULTIFUNCTIONAL VEHICLE FIRE EXTINGUISHER HOLDER**

(30) Priority: 29.08.2024 KR 20240116488
(71) Applicant: Yun, Sangkwon, Seoul (KR)
(72) Inventor: Yun, Sangkwon, Seoul (KR)
(74) Representative: Fortuna, Jevgenijs

(57) **Abstract**

An objective of the present disclosure is to provide a multifunctional vehicle fire extinguisher holder that can detachably fix a vehicle fire extinguisher to a floor mat inside a vehicle. To this end, the multifunctional vehicle fire extinguisher holder of the present disclosure includes: a holder body; a fire extinguisher gripping part provided on one side of the holder body and configured to grip a vehicle fire extinguisher; and a floor mat mounting part provided on another side of the holder body to be mounted to a floor mat.

## Description

### [Technical Field]

The present disclosure relates to a vehicle fire extinguisher holder.

### [Background Art]

Generally, a vehicle fire extinguisher is a device provided in a vehicle so that a driver can quickly suppress a fire when a fire occurs inside or outside the vehicle.

Recently, installation of vehicle fire extinguishers has been increasingly mandated due to vehicle fires. That is, for vehicles with seven or more seats, carrying a fire extinguisher is currently mandatory, and from December 2024, carrying or installing a fire extinguisher will be mandatory for all vehicles with five or more seats.

Due to this mandatory installation, previously, vehicle fire extinguishers were placed in vehicles without being fixed inside the vehicle cabin or trunk and were simply left as is.

However, if a vehicle fire extinguisher is left unsecured inside a vehicle, it can move inside the vehicle during driving, and while moving, safety accidents may occur due to reasons such as the fire extinguisher getting caught under the brake pedal.

### [Disclosure]

### [Technical Problem]

An objective of the present disclosure is to provide a multifunctional vehicle fire extinguisher holder that can detachably fix a vehicle fire extinguisher to a floor mat inside a vehicle.

### [Technical Solution]

In order to achieve the objectives, a multifunctional vehicle fire extinguisher holder according to an embodiment of the present disclosure includes: a holder body; a fire extinguisher gripping part provided on a portion of the holder body and configured to grip a vehicle fire extinguisher; and a floor mat mounting part provided on another portion of the holder body and configured to be detachably mounted to a floor mat.

The floor mat mounting part may include: a bottom support portion configured to support a bottom of the floor mat; a top support portion configured to support a top of the floor mat; and an elastic bridge configured to connect a front end of the bottom support portion and a front end of the top support portion, and apply an elastic force such that a rear end of the bottom support portion and a rear end of the top support portion are brought together.

The floor mat mounting part may further include an anti-slip projection provided on a surface of the bottom support portion facing the top support portion and configured to prevent sliding from a bottom of the floor mat.

The floor mat mounting part may further include an upward bending portion extending in a bent state from the rear end of the top support portion, and bent in a direction away from the bottom support portion toward the direction in which the rear end of the top support portion faces.

The floor mat mounting part may further include: a through-hole formed through the top support portion; and a fastening hole formed through the bottom support portion and aligned with the center of the through-hole to fasten a bolt.

The through-hole may have a larger diameter than the fastening hole so that a head of the bolt can pass through the through-hole.

The floor mat mounting part may include: a first floor mat mounting part provided at one end of the holder body; and a second floor mat mounting part provided at the other end of the holder body.

The fire extinguisher gripping part may include: a first arc strap provided on one side of the holder body and surrounding a portion of the circumference of the vehicle fire extinguisher; a second arc strap provided on another side of the holder body and surrounding the other portion of the circumference of the vehicle fire extinguisher.

The multifunctional vehicle fire extinguisher holder according to an embodiment of the present disclosure may further include a fire extinguisher supporting part that supports the lower end surface of a vehicle fire extinguisher.

The fire extinguisher supporting part may further include an extinguisher-directed protrusion that relatively protrudes to support the vehicle fire extinguisher by being fitted in a recessed middle portion of the lower end surface of the vehicle fire extinguisher.

### [Advantageous Effects]

As described above, the multifunctional vehicle fire extinguisher holder according to an embodiment of the present disclosure can have the following effects.

According to an embodiment of the present disclosure, a multifunctional vehicle fire extinguisher holder includes a holder body, a fire extinguisher gripping part, and a floor mat mounting part is provided. Accordingly, a vehicle fire extinguisher gripped by the fire extinguisher gripping part on the holder body can be detachably mounted to a floor mat through the floor mat mounting part, so the vehicle fire extinguisher can be prevented from moving inside a vehicle during driving, and in particular, the vehicle fire extinguisher does not get caught under a brake pedal, whereby it is possible to prevent safety accidents in advance.

Further, according to an embodiment of the present disclosure, since the floor mat mounting part includes a bottom support portion, a top support portion, and an elastic bridge, a floor mat can be detachably inserted between the bottom support portion and the top support portion by placing the bottom of the floor mat on the bottom support portion and placing the top of the floor mat on the top support portion, and the floor mat mounting part can be firmly mounted to the floor mat as the rear end of the bottom support portion and the rear end of the top support portion are brought together by the elastic bridge connecting the front end of the bottom support portion and the front end of the top support portion.

Further, according to an embodiment of the present disclosure, since the floor mat mounting part further includes an anti-slip projection, it is possible to increase frictional force between the bottom of the floor mat and the bottom support portion by means of the anti-slip projection, so even when an inertial force generated when a vehicle is abruptly stopped or abruptly started acts on the multifunctional vehicle fire extinguisher holder of the present disclosure, the floor mat mounting part can be prevented from coming off the floor mat.

Further, according to an embodiment of the present disclosure, since the floor mat mounting part further includes an upward bending portion, during insertion of the floor mat between the bottom support portion and the top support portion, without the need for a user to manually spread the bottom support portion and the top support portion apart, an edge of the floor mat can be smoothly inserted into a spaced-apart gap between the upward bending portion and the bottom support portion formed by the upward bending portion.

Further, according to an embodiment of the present disclosure, since the floor mat mounting part further includes a through-hole and a fastening hole, a bolt can be fastened through the through-hole and the fastening hole to the floor mat inserted between the bottom support portion and the top support portion, so the floor mat mounting part can be more firmly fixed to the floor mat.

Further, according to an embodiment of the present disclosure, since the through-hole has a larger diameter than the fastening hole so that the head of the bolt can pass through the through-hole, with the head of the bolt passing through the through-hole, as the bolt is sequentially fastened to the floor mat and the fastening hole, the head of the bolt can be strongly brought into close contact with the top of the floor mat, so the floor mat can be prevented from being dented even when an external force such as an inertial force of the vehicle is generated, and the head of the bolt can be positioned inside further the top support portion, so the head of the bolt can be prevented from being caught on the vehicle fire extinguisher.

Further, according to an embodiment of the present disclosure, since the floor mat mounting part includes a first floor mat mounting part and a second floor mat mounting part, the multifunctional vehicle fire extinguisher holder of the present disclosure can be mounted to a floor mat at two positions, so even when an external force such as an inertial force of a vehicle is generated, rotation of the multifunctional vehicle fire extinguisher holder with reference to the floor mat mounting part can be prevented, and ultimately, a safer mounting can be achieved.

Further, according to an embodiment of the present disclosure, since the fire extinguisher supporting part further includes an extinguisher-directed protrusion, the extinguisher-directed protrusion can be fitted into the recessed middle portion of the lower end surface of the vehicle fire extinguisher, so movement of the vehicle fire extinguisher can be more positively prevented.

### [Description of Drawings]

FIG. 1 is a schematic view illustrating a multifunctional vehicle fire extinguisher holder according to an embodiment of the present disclosure;
FIG. 2 is a view of the multifunctional vehicle fire extinguisher holder of FIG. 1 seen from the front;
FIG. 3 is a main part cross-sectional view schematically illustrating a state in which a floor mat is inserted in a floor mat mounting part;
FIG. 4 is a main part cross-sectional view schematically illustrating a state in which a bolt is fastened after the floor mat is inserted in the floor mat mounting part; and
FIG. 5 is a main part cross-sectional view schematically illustrating a state in which a recessed middle portion of the vehicle fire extinguisher is fitted on an extinguisher-directed protrusion of an extinguisher support.

### [Mode of Invention]

Hereafter, embodiments of the present disclosure will be described in detail with reference to the accompanying drawings so that those skilled in the art can easily accomplish the present disclosure. However, the present disclosure may be modified in various different ways and is not limited to the embodiments described herein.

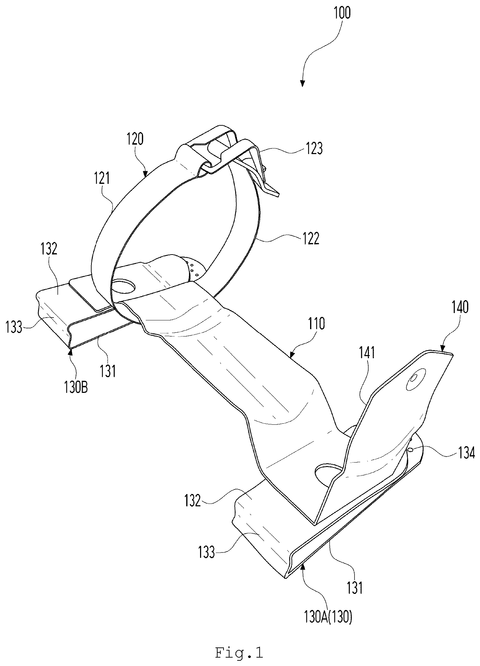

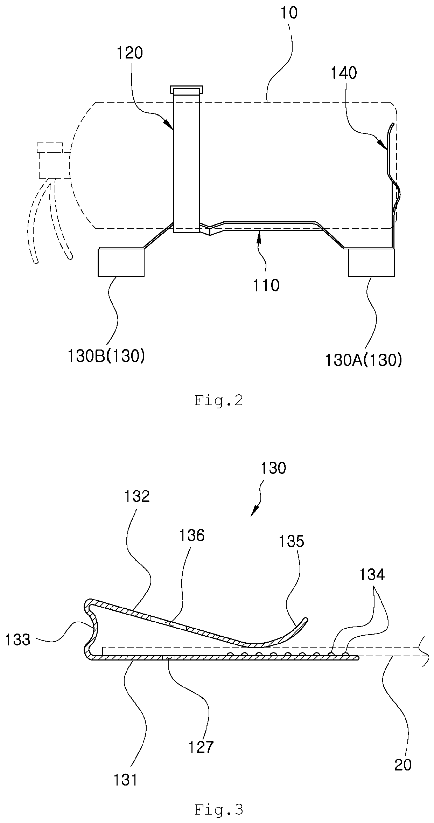

FIG. 1 is a schematic view illustrating a multifunctional vehicle fire extinguisher holder according to an embodiment of the present disclosure and FIG. 2 is a view of the multifunctional vehicle fire extinguisher holder of FIG. 1 seen from the front.

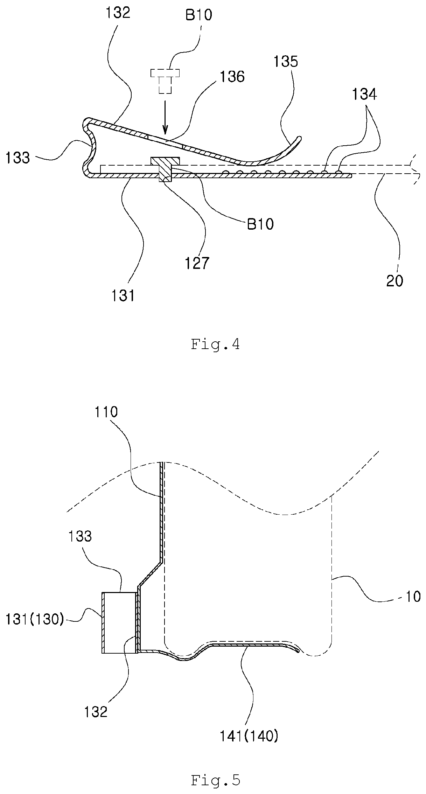

FIG. 3 is a main part cross-sectional view schematically illustrating a state in which a floor mat is inserted in a floor mat mounting part, FIG. 4 is a schematic cross-sectional view illustrating a state in which a bolt is fastened after the floor mat is inserted in the floor mat mounting part, and FIG. 5 is a main part cross-sectional view schematically illustrating a state in which a recessed middle portion of the vehicle fire extinguisher is fitted on an extinguisher-directed protrusion of an extinguisher support.

A multifunctional vehicle fire extinguisher holder 100 according to an embodiment of the present disclosure, as illustrated in FIGS. 1 to 5, includes a holder body 110, a fire extinguisher gripping part 120, and a floor mat mounting part 130. Hereafter, the components are described with reference to FIGS. 1 to 5.

The holder body 110 is a component forming the main body of the multifunctional vehicle fire extinguisher holder 100 of the present disclosure. The holder body 110 may be made of a metal plate or the like for mounting strength, and as illustrated in FIG. 1, may have a bent shape in an arc form to be able to surround a portion of the circumferential surface of the vehicle fire extinguisher 10.

The fire extinguisher gripping part 120 is a component for gripping the vehicle fire extinguisher 10. The fire extinguisher gripping part 120, as illustrated in FIG. 1, may be provided on a portion of the holder body 110. For example, the fire extinguisher gripping part 120, as illustrated in FIG. 1, may include a first arc strap 121, a second arc strap 122, and a connector 123. The first arc strap 121 may be provided on one side of the holder body 110 and can surround a portion of the circumference of the vehicle fire extinguisher 10. The second arc strap 122 may be provided on another side of the holder body 110 and can surround the other portion of the circumference of the vehicle fire extinguisher 10. The connector 123 can detachably connect the first arc strap 121 and the second arc strap 122.

The floor mat mounting part 130 is a component for detachably mounting to the floor mat 20. The floor mat mounting part 130, as illustrated in FIGS. 1 and 2, may be provided at another portion of the holder body 110.

Accordingly, since the components described above are provided, the vehicle fire extinguisher 10 gripped by the fire extinguisher gripping part 120 on the holder body 110 can be detachably mounted to a floor mat 20 through the floor mat mounting part 130, whereby it is possible to prevent the vehicle fire extinguisher 10 from moving inside a vehicle during driving, and particularly, the vehicle fire extinguisher 10 does not get caught under a brake pedal, so it is possible to prevent safety accidents.

Hereafter, the floor mat mounting part 130 is described in more detail with reference again to FIGS. 1 to 4.

The floor mat mounting part 130, as illustrated in FIGS. 1, 3, and 4, may include a bottom support portion 131, a top support portion 132, and an elastic bridge 133. The bottom support portion 131 can support the bottom of the floor mat 20. The top support portion 132 can support the top of the floor mat 20. The elastic bridge 133 can connect the front end of the bottom support portion 131 and the front end of the top support portion 132, and can apply elastic force to bring together the rear end of the bottom support portion 131 and the rear end of the top support portion 132. Therefore, by placing the bottom of the floor mat 20 on the bottom support portion 131 and the top of the floor mat 20 on the top support portion 132, the floor mat 20 can be detachably inserted between the bottom support portion 131 and the top support portion 132. Further, the rear end of the bottom support portion 131 and the rear end of the top support portion 132 are brought together by the elastic bridge 133 connecting the front end of the bottom support portion 131 and the front end of the top support portion 132, whereby the floor mat mounting part 130 can be securely mounted to the floor mat 20.

Further, as illustrated in FIGS. 3 and 4, the floor mat mounting part 130 can further include a plurality of anti-slip projections 134. The anti-slip projections 134 can be provided on a surface of the bottom support portion 131 facing the top support portion 132, and can prevent sliding from the bottom of the floor mat 20. Accordingly, by means of the anti-slip projections 134, it is possible to increase the frictional force between the bottom of the floor mat 20 and the bottom support portion 131, whereby it is possible to prevent the floor mat mounting part 130 from coming off the floor mat 20 even when an inertial force generated when a vehicle is abruptly stopped or abruptly started acts on the multifunctional vehicle fire extinguisher holder 100 of the present disclosure.

Further, as illustrated in FIGS. 3 and 4, the floor mat mounting part 130 may further include an upward bending portion 135. The upward bending portion 135 may extend in a bent state from the rear end of the top support portion 132, and may be bent in a direction away from the bottom support portion 131 toward the direction in which the rear end of the top support portion 132 faces. Accordingly, during insertion of the floor mat 20 between the bottom support portion 131 and the top support portion 132, without the need for a user to manually spread the bottom support portion 131 and the top support portion 132 apart, it is possible to smoothly insert an edge of the floor mat 20 into a spaced-apart gap between the upward bending portion 135 and the bottom support portion 131 formed by the upward bending portion 135.

Further, as illustrated in FIGS. 3 and 4, the floor mat mounting part 130 may further include a through-hole 136 and a fastening hole 137. The through-hole 136 may be formed through the top support portion 132. The fastening hole 137, which is for fastening a bolt B10, can be formed through the bottom support portion 131 and can be aligned with the center of the through-hole 136. Accordingly, as illustrated in FIG. 4, the bolt B10 can be fastened through the through-hole 136 and the fastening hole 137 to the floor mat 20 inserted between the bottom support portion 131 and the top support portion 132, so that the floor mat mounting part 130 can be more firmly fixed to the floor mat 20.

Further, referring to FIGS. 3 and 4, the through-hole 136 may have a larger diameter than the fastening hole 137 so that a head of the bolt B10 can pass through the through-hole. Accordingly, with the head of the bolt B10 passing through the through-hole 136, as the bolt B10 is sequentially fastened to the floor mat 20 and the fastening hole 137, the head of the bolt B10 can be strongly brought into close contact with the top of the floor mat 20, so the floor mat 20 can be prevented from being dented even when an external force such as an inertial force of the vehicle is generated, and the head of the bolt B10 can be positioned inside further than the top support portion 132, so the head of the bolt B10 can be prevented from being caught on the vehicle fire extinguisher 10.

Meanwhile, the above-described floor mat mounting part 130, as illustrated in FIG. 1, may include a first floor mat mounting part 130A and a second floor mat mounting part 130B. The first floor mat mounting part 130A may be provided at one end of the holder body 110, and the second floor mat mounting part 130B may be provided at the other end of the holder body 110. For reference, since the first and second floor mat mounting parts 130A and 130B may identically include the specific components of the above-described floor mat mounting part 130, and a detailed description thereof is omitted. Accordingly, the multifunctional vehicle fire extinguisher holder 100 of the present disclosure can be mounted to the floor mat 20 at two positions, so even when an external force such as an inertial force of a vehicle is generated, rotation of the multifunctional vehicle fire extinguisher holder 100 with reference to the floor mat mounting part 130 can be prevented, and ultimately, a safer mounting can be achieved.

In addition, the multifunctional vehicle fire extinguisher holder 100 according to an embodiment of the present disclosure, as illustrated in FIGS. 1 and 5, may further include a fire extinguisher supporting part 140 that supports the lower end surface of the vehicle fire extinguisher 10. In particular, the fire extinguisher supporting part 140, as illustrated in FIG. 5, may further include an extinguisher-directed protrusion 141 that relatively protrudes to support the vehicle fire extinguisher 10 by being fitted in a recessed middle portion of the lower end surface of the vehicle fire extinguisher 10. Accordingly, the extinguisher-directed protrusion 141 can be fitted into the recessed middle portion of the lower end surface of the vehicle fire extinguisher 10, so movement of the vehicle fire extinguisher 10 can be more positively prevented.

Although embodiments of the present disclosure were described above in detail, the spirit of the present disclosure is not limited thereto and the present disclosure may be changed and modified in various ways on the basis of the basic concept without departing from the scope of the present disclosure described in the following claims.

**[Description of Reference Numerals]**

| | | | |
|---|---|---|---|
| 10: | vehicle fire extinguisher | 20: | floor mat |
| 100: | multifunctional vehicle fire extinguisher holder | | |
| 110: | holder body | 120: | fire extinguisher gripping part |
| 121: | first arc strap | 122: | second arc strap |
| 123: | connector | 130: | floor mat mounting part |
| 130A: | first floor mat mounting part | 130B: | second floor or mat mounting part |
| 131: | bottom support portion | 132: | top support portion |
| 133: | elastic bridge | 134: | anti-slip projection |
| 135: | upward bending portion | 136: | through-hole |
| 137: | fastening hole | 140: | fire extinguisher supporting part |
| 141: | extinguisher-directed protrusionsion | B10: | bolt |

## Claims

1. A multifunctional vehicle fire extinguisher holder comprising:
a holder body;
a fire extinguisher gripping part provided on a portion of the holder body and configured to grip a vehicle fire extinguisher; and
a floor mat mounting part provided on another portion of the holder body and configured to be detachably mounted to a floor mat.

2. The multifunctional vehicle fire extinguisher holder of claim 1, wherein the floor mat mounting part includes:
a bottom support portion configured to support a bottom of the floor mat;
a top support portion configured to support a top of the floor mat; and
an elastic bridge configured to connect a front end of the bottom support portion and a front end of the top support portion, and apply an elastic force such that a rear end of the bottom support portion and a rear end of the top support portion are brought together.

3. The multifunctional vehicle fire extinguisher holder of claim 2, wherein the floor mat mounting part further includes an anti-slip projection provided on a surface of the bottom support portion facing the top support portion and configured to prevent sliding from a bottom of the floor mat.
